## Europäisches Patentamt
## European Patent Office
## Office européen des brevets

(19)

(11) Veröffentlichungsnummer: **0 228 628**
**A2**

(12) **EUROPÄISCHE PATENTANMELDUNG**

(21) Anmeldenummer: **86117186.6**

(22) Anmeldetag: **10.12.86**

(51) Int. Cl.⁴: **F 04 B 13/00**
**F 04 B 21/08**

(30) Priorität: **08.01.86 DE 3600341**
**08.01.86 DE 3600342**
**08.01.86 DE 3600343**

(43) Veröffentlichungstag der Anmeldung:
**15.07.87 Patentblatt 87/29**

(84) Benannte Vertragsstaaten:
**AT BE CH DE FR GB IT LI NL SE**

(71) Anmelder: **Saphirwerk Industrieprodukte AG**
**Unterer Kanalweg 7**
**CH-2560 Nidau(CH)**

(72) Erfinder: **Funke, Herbert, Dr.**
**Ludwig-von-Nagelstrasse 12**
**D-8033 Krailling(DE)**

(74) Vertreter: **Schmidt-Evers, Jürgen, Dipl.-Ing. et al,**
**Patentanwälte Dipl.-Ing. H. Mitscherlich Dipl.-Ing. K.**
**Gunschmann Dipl.-Ing. Dr.rer.nat. W. Körber Dipl.-Ing. J.**
**Schmidt-Evers Dipl.-Ing. W. Melzer Steinsdorfstrasse 10**
**D-8000 München 22(DE)**

(54) Feindosierpumpe für Flüssigkeiten, insbesondere zur Anwendung in der HPLC-Technik.

(57) Bei einer Feindosierpumpe, die insbesondere zum Einsatz in der HPLC-Technik bestimmt ist, ist die Pumpenkopfbüchse (8) aus durchsichtigem Material, vorzugsweise aus künstlichem synthetischem Saphir oder monokristallinem Zirkonoxid hergestellt. Das Pumpenkopfgehäuse (1) ist so gestaltet, daß die Pumpenkopfbüchse (8) visuell zugänglich ist. Auch die patronenartigen Ventileinheiten (27, 28) können aus durchsichtigen Bauteilen bestehen und dadurch visuell zugänglich sein. Die Bewegung der Kugeln (31) in den Ventileinheiten (27, 28) kann mittels eines optischen Sensorsystems erfaßt werden, um ein Steuersignal für eine Regelschaltung zur Kompensation des Einflusses der spezifischen Kompressibilität des Fördermediums auf den Pumpwirkungsgrad bei hohen und höchsten Förderdrücken zu erhalten. Die Ventileinheiten (27, 28) liegen einerseits an der Pumpenkopfbüchse (8) an und andererseits an einem Anschlußrohradapter (42, 43) an, der einen abgewinkelten Leitungskanal enthält. Auf den Anschlußrohradapter (42, 43) wird mittels einer in einem Klemmbügel (35, 36) verankerten oder über einen L-förmigen Klemmwinkel (100,102) wirkenden Schraube (49, 50, 51, 52) Dichtungsdruck ausgeübt. Auf diese Weise werden die üblichen Fittingverbindungen und ihre Nachteile vermieden.

FIG.2

EP 0 228 628 A2

9. Dezember 1986

Feindosierpumpe für Flüssigkeiten, insbesondere zur Anwendung in der HPLC-Technik

Die Erfindung betrifft eine Feindosierpumpe für Flüssigkeiten, insbesondere zur Anwendung in der HPLC-Technik, mit einem Pumpenkopfgehäuse, mit mindestens einer darin angeordneten, einen Verdrängerraum sowie Zu- und Ableitungskanäle enthaltenden Pumpenkopfbüchse und mit einem Tauchkolben für jeden Verdrängerraum, wobei Pumpenkopfbüchse(n) und Tauchkolben aus chemisch inertem Material bestehen.

Eine derartige Feindosierpumpe ist in der deutschen Patentschrift 31 22 091 der Anmelderin beschrieben. Insbesondere ist dort angegeben, daß eine den Pumpenkopf auskleidende Pumpenkopfbüchse aus einem chemisch inertem Material bestehen soll, beispielsweise aus den Kunststoffen Polymonochlortrifluoräthylen (KEL F) oder Polyvinilidenfluorid (PVDF). In der erwähnten Patentschrift ist ferner ausgeführt, daß die Pumpenkopfbüchse auch aus keramischem Material gefertigt sein kann, beispielsweise aus $Al_2O_3$-Keramik, die polykristallin ist.

Das bisher für die Pumpenkopfbüchse verwendete oder vorgeschlagene Material ist undurchsichtig und erlaubt zu erwünschter visueller Kontrolle des Fördervorganges keinen Einblick in den Verdrängerraum. Hinzu kommt, daß die für die Beobachtung des Fördervorganges wesentlichen Bereiche der Pumpenkopfbüchse von außen nicht sichtbar, sondern durch das Pumpenkopfgehäuse verdeckt sind. Der Möglichkeit einer visuellen Kontrolle des Fördervorganges kommt aber besondere Bedeutung zu, da sich die Fördermenge bei dem hier betrachteten Pumpentyp, der insbesondere Anwendung in der HPLC-Analysentechnik findet, im Bereich von einigen ml/min bis herunter zu wenigen µl/min bewegt und zudem ein Trend zu geräte- und förderleistungsmäßigen Miniaturisierung besteht.

Der Erfindung liegt deshalb die Aufgabe zugrunde, die bekannte Feindosierpumpe dahingehend zu verbessern, daß der Fördervorgang von außen visuell beobachtet und überwacht werden kann.

Die Aufgabe ist erfindungsgemäß dadurch gelöst, daß das Material der Pumpenkopfbüchse(n) durchsichtig ist, und daß das Pumpenkopfgehäuse mit mindestens einer Öffnung oder Ausnehmung versehen ist, durch welche die Pumpenkopfbüchse(n) von außen sichtbar ist (sind).

Die visuelle Zugänglichkeit der Pumpenkopfbüchse(n) gestattet es, den Fördervorgang im Verdrängersystem der Pumpe direkt optisch zu erfassen und zu überwachen. Insbesondere ergibt sich die Möglichkeit, Funktionsstörungen infolge Kavitation (Dampfblasenbildung und Ausgasen des Fördermediums im Verdrängerraum) oder infolge von Gasblasen, die über den Saugstrom in den Verdrängerraum eingeschleppt werden, oder aufgrund eines Ausfalls der Ventile augenblicklich und "vor Ort" zu erkennen. Ferner können die Kolbenbewegung sowie der Zustand der Kolbendichtung, das Ausmaß der Abriebbildung an der Dichtung und die Bildung von Ablagerungen auf den Kolben erfaßt werden.

Naheliegend wäre es, die Pumpenkopfbüchse aus Glas zu fertigen. Die mechanische Festigkeit von Glas reicht jedoch bei weitem nicht aus, der hydraulischen Beaufschlagung durch das Fördermedium und der mechanischen Beanspruchung infolge der Pressung durch die zugehörigen Ventileinheiten zu widerstehen. Bei dem hier betrachteten Pumpentyp treten Förderdrücke bis zu 600 bar und darüber auf. Diesen Drücken vermag eine Pumpenkopfbüchse aus Glas bei den hier angestrebten Wandstärken zwischen 2-8 Millimeter nicht standzuhalten.

Es wird deshalb vorgeschlagen, die Pumpenkopfbüchse(n) aus synthetischem Saphir (das ist monokristallines $Al_2O_3$) oder monokristallinem Zirkonoxyd herzustellen und die Oberfläche nach Formgebung durch schleifende Bearbeitung zu polieren, um die Pumpenkopfbüchse(n) durchsichtig zu machen. Das vorgeschlagene Material erlaubt, daß die Pumpenkopfbüchse mit einem außerordentlich hohen Förderdruck beaufschlagt werden kann; außerdem ist es ohne Einschränkung chemisch inert und schließt jegliche, auch spurenweise Kontamination des Fördermediums zuverlässig aus, was für die Anwendung auf dem Gebiet der speziellen biochemischen Analytik im Hinblick auf Verunreinigung durch Schwermetallionen und in Bezug auf Oberflächenabtragung von Bedeutung ist. Unter diesem Gesichtspunkt ist die Werkstoffauswahl für die Pumpenkopfbüchse sehr spezifisch. Ihr wird selbständige erfinderische Bedeutung beigemessen. Ferner resultiert aus der außergewöhnlichen Härte von synthetischem Saphir und monkristallinem Zirkonoxyd der Vorteil der Kratzfestigkeit der Pumpenkopfbüchse, was für den Erhalt der Durchsichtigkeit auch bei langdauerndem rauhen Betrieb bedeutsam ist.

Für die auf die Herstellung von Saphirprodukten spezialisierte Anmelderin war es selbst überraschend, daß das vorgeschlagene Material für die Pumpenkopfbüchse(n) selbst dann hoch- und höchstdrucktauglich ist, wenn Wandstärken beibehalten werden, die bisher für polykristallines Zirkonoxydkeramik, einem keramischen Sonderwerkstoff, der sich durch eine speziell hohe Zugfestigkeit auszeichnet, typisch waren. Dies überrascht umso mehr, als bei der Pumpenkopfbüchse infolge des in axialer Richtung verlaufenden Verdrängerraums sowie der dazu quer verlaufenden Zu- und Ableitungskanäle eine komplexe mechanische Spannungen induzierende Durchdringung des Werkstückes gegeben ist. Trotzdem hält das Material auch bei den hier angestrebten Wandstärken zwischen 2-8 mm, vorzugsweise 5 mm, der Beanspruchung durch Förderdrücke im Bereich bis zu 600 bar und darüber stand. Dies auch, obwohl eine zusätzliche punktuelle Druckspannungsbeanspruchung durch die zugehörigen Ventileinheiten (wird später noch beschrieben) auftritt.

Ergänzend ist noch zu bemerken, daß in der deutschen Patentschrift 31 22 091 die Verwendung von Saphir als Werkstoff für den Kolben erwähnt ist. Der Einsatz von Saphir für dieses Pumpenbauteil ist mit dem oben beschriebenen jedoch nicht vergleichbar, da es sich dort allein um eine Druckbeanspruchung eines massiv gestalteten zylindrischen Körpers handelt, wobei die Wahl von synthetischem Saphir als Werkstoff auf eine möglichst hohe Verschleißfestigkeit abgestellt ist.

Um die durchsichtige Pumpenkopfbüchse visuell zugänglich zu machen, wird für ein Einzelkopf-Verdrängersystem vorgeschlagen, das Pumpenkopfgehäuse nach Art eines Uförmigen Joches auszubilden, wobei die Pumpenkopfbüchse in dessen zentraler Aussparung angeordnet und durch den von den Jochschenkeln gebildeten Spalt sichtbar ist.

Alternativ dazu wird für ein Doppel-Verdrängersystem mit blockförmigem Pumpenkopfgehäuse vorgeschlagen, dieses mit Aussparungen zur Aufnahme der Pumpenkopfbüchsen zu versehen, wobei zu jeder Aussparung ein Sehschlitz führt, durch den die in der Aussparung befindliche Pumpenkopfbüchse sichtbar ist.

Bereits in der deutschen Patentschrift 31 22 091 ist beschrieben, daß das Pumpenkopfgehäuse Aufnahmebohrungen für patronenartige Ventileinheiten aufweisen kann, von denen jede mit dem Zuleitungskanal bzw. dem Ableitungskanal (der) einer Pumpenkopfbüchse in Verbindung steht. Diese patronenartigen Ventileinheiten werden durch Kleinfittinge (Fittingschraube mit Schneidring) mit einer Anschlußrohrleitung für das Fördermedium verbunden. Es hat sich jedoch herausgestellt, daß derartige Fitting-Verbindungen bei mehrfachem Festschrauben und Lösen infolge fortschreitender plastischer Deformation an den Schneidringen schnell zur Leckage neigen.

Um vorstehendem Nachteil abzuhelfen, geht ein weiterer Vorschlag, dem selbständige erfinderische Bedeutung beigemessen wird, dahin, daß jede Ventileinheit durch ein an dem Pumpenkopfgehäuse verankerbares Halterungselement in der ihr zugeordneten Aufnahmebohrung gehalten und zwecks Verbindung mit dem Zuleitungskanal bzw. Ableitungskanal gegen die Pumpenkopfbüchse gedrückt wird, daß zwischen jede Ventileinheit und dem zugehörigen Halterungselement ein Anschlußrohradapter zwischengeschaltet ist, welcher einen abgewinkelten Leitungskanal enthält, der an seinem einen Ende mit der Ventileinheit und an seinem anderen Ende mit einem Anschlußrohr für das Fördermedium verbunden ist, und daß der Anschlußrohradapter die Ventileinheit und die Pumpenkopfbüchse mittels einer das Halterungselement durchgreifenden Fixierschraube aufeinanderpreßbar sind. Durch die Verwendung eines Anschlußrohradapters kann nicht nur eine Fittingverbindung vermieden werden, sondern dadurch wird ferner erreicht, daß die Drehbewegung der Fixierschraube sich nicht auf die patronenartige Ventileinheit überträgt. Dies ist wichtig, weil die periphere Abdichtung an den Übergangsstellen mittels Flachdichtungen bewerkstelligt wird, die optimalerweise zum Erreichen von Dichtigkeit nur axial vorgespannt werden sollen. Die mit der Pumpenkopfbüchse gepaarte Flachdichtung (Dichtring aus PTFE-Compound) der patronenartigen Ventileinheiten kommt auf einer unpolierten, d. h. bewußt relativ rauh gelassenen Kontaktfläche der Pumpenkopfbüchse zu liegen. Ein Verdrehen der Flachdichtung beim Fixiervorgang auf dieser Kontaktfläche würde ein angestrebtes oberflächenmäßiges "Verkeilen" der beiden Oberflächen im Mikrobereich stören.

Das Halterungselement für eine Ventileinheit kann in einer ersten Ausführungsform klemmbügelartig gestaltet und dadurch an dem Pumpenkopfgehäuse verankert sein, daß es mit an seinen Bügelenden vorgesehenen Vorsprüngen oder Abkröpfungen in an dem Pumpenkopfgehäuse befindlichen Nuten eingreift oder an dem Pumpenkopfgehäuse befindliche Vorsprünge hintergreift, und daß die den Quersteg des klemmbügelartigen Halterungselementes durchgreifende Fixierschraube direkt auf den zwischengeschalteten Anschlußrohradapter einwirkt.

Eine andere Ausfürhungsform kann darin bestehen, daß das Halterungselement für eine Ventileinheit als L-förmiger Klemmwinkel ausgebildet ist, der aus einem Stützschenkel und einem Fixierschenkel besteht, daß der Stützschenkel mit einer Abkröpfung versehen ist, die in eine entsprechende Ausnehmung bzw. einen Schlitz an dem Pumpenkopfgehäuse eingreift, und daß der Fixierschenkel auf dem zwischen ihm und der Ventileinheit zwischengeschalteten Anschlußrohradapter aufsitzt und von der in das Pumpenkopfgehäuse eingeschraubten Fixierschraube durchgriffen wird, derart, daß die Fixierschraube indirekt auf den Anschlußrohradapter einwirkt.

Die Kraftübertragung vom Fixierschenkel des L-förmigen Klemmwinkels auf den Anschlußrohradapter erfolgt zweckmäßigerweise durch einen fest im Fixierschenkel des Klemmwinkels verankerten Stift mit balligem Ende oder durch eine Kugel, die in ein im Fixierschenkel vorgesehenes Sackloch eingepreßt ist.

Weiterhin ist es vorteilhaft, in jedem Halterungselement eine Ausnehmung oder einen Schlitz zur Aufnahme des zugeordneten Anschlußrohradapters vorzusehen.

Die Verwendung von Halterungselementen in Form von Klemmbügeln oder L-förmigen Klemmwinkeln als Widerlager für die Fixierschrauben zu den patronenartigen Ventileinheiten gewährleistet im übrigen eine optimale Einsehbarkeit der Pumpenkopfhülse im Bereich des Verdrängerraums und des Einschliffs für die Kolbendichtung.

Es ist nicht nur vorteilhaft, die Pumpenkopfbüchse durchsichtig und visuell zugänglich zu machen, sondern auch die Ventileinheiten, wobei die Ventilkugeln andersfarbig oder undurchsichtig sind. Ein Vorschlag zur Realisierung dieses Gedankens ist, daß die Ventileinheiten bis auf die Ventilkugeln aus nach formgebendem Schleifen durch Polieren durchsichtig gemachtem synthetischen Saphir oder monokristallinem Zirkonoxid bestehen, und daß die Ventilkugeln aus Rubin bestehen. Um die Ventileinheiten dann visuell von außen zugänglich zu machen, kann das Pumpenkopfgehäuse mit entsprechenden Ausnehmungen oder Schaulöchern versehen werden.

Die wie vorstehend beschriebenen durchsichtigen und von außen visuell zugänglichen Ventileinheiten können nun durch ein optisches Sensorsystem, wie beispielsweise eine Lichtschranke, überwacht werden, die auf die Funktion der Ventileinheit, insbesondere auf das Abheben der Ventilkugel vom Ventilsitz anspricht. Dieser optischen Überwachung kommt entgegen, daß die Ventilkugel - wenn sie aus Rubin besteht - andersfarbig ist. Das optische Sensorsystem bzw. die Lichtschranken können zur Istwertgewinnung für das tatsächliche Einsetzen des Fördervorganges in einer Regelschaltung verwendet werden, mittels welcher die Kolbengeschwindigkeit zwecks Kompensation des Einflusses der spezifischen Kompressibilität der zur fördernden Flüssigkeit auf den Pumpenwirkungsgrad im Verdrängerraum geregelt wird. Bisher wurde ein solches Istwertsignal durch fortlaufende Messung des Drucks im Verdrängerraum (deutsche Patentschrift 31 22 091) gewonnen. Die Erfassung von Druckwerten dieser Art ist jedoch meßtechnisch schwierig, insbesondere deshalb, weil das Fördermedium im Verdrängerraum innerhalb von Toleranzgrenzen Druckschwankungen unterliegt, die auf Einflüsse im nachgeordneten System zurückgehen und eine sichere Istwertgewinnung nur dann zulassen, wenn die festgestellte Druckänderung den Toleranzbereich übersteigt. Das Abheben der Ventilkugel vom Ventilsitz des Auslaßventiles ist dagegen eindeutig feststellbar und optisch erfaßbar. Dem Gedanken der optischen Istwertgewinnung für das tatsächliche Einsetzen des Fördervorganges zwecks Nutzung in einem Regelkreis zur Kompensation des Einflusses der Kompressibilität des Fördermediums auf den Pumpenwirkungsgrad im Verdrängerraum als Folge von dessen spezifischer Kompressibilität wird selbständige erfinderische Bedeutung beigemessen.

Um den Fördervorgang und die Kolbenbewegung im Verdrängerraum besser beobachtbar zu machen, wird vorgeschlagen, den - wie bekannt - aus synthetischem Saphir bestehenden Kolben in seiner Einspannung bzw. seinem Schaft mit einer Lichtquelle zur Einleitung von Licht zu versehen. Diese Lichtquelle kann beispielsweise eine Leuchtdiode sein. Alternativ dazu ist es möglich, das Pumpenkopfgehäuse mit mindestens einer zu der (den) Aussparung(en) für die Pumpenkopfbüchse(n) führenden Bohrung zu versehen, welche zur Aufnahme einer Lichtquelle dient, die die Pumpenkopfbüchse(n) beleuchtet.

Zusammenfassend sollen nochmals die Vorteile festgehalten werden, die durch die Durchsichtigkeit der Pumpenkopfbüchse und der Ventileinheiten sowie die visuelle Zugänglichkeit dieser Pumpenteile erreicht wird. Es wird eine direkte Überwachung des Funktionierens der Ventile, der Kolbenbewegung und des Zustandes der Kolbendichtung gewährleistet. Dies wiederum ermöglicht es, das Auftreten von Kavitation oder ein Hängenbleiben von Luftblasen, die mit dem Saugstrom der Pumpe in den Verdrängerraum gelangen, zu erfassen.

Erkennbar ist auch das Ausmaß der Bildung von Abrieb an der Kolbendichtung sowie die Bildung von Ablagerungen an der Kolbenoberfläche. Weiterhin kann das Auftreten von Leckage an sämtlichen peripheren Dichtelementen, insbesondere auch an den Ventileinheiten festgestellt werden.

Schließlich ist es möglich, ein opto-elektronisches Steuersignal für die Regelung der Kolbengeschwindigkeit zwecks Kompensation des Einflusses der spezifischen Kompressibilität des Fördermediums auf Pumpwirkungsgrad bei hohen und höchsten Förderdrücken zu gewinnen.

Die Erfindung betrifft ferner eine Feindosierpumpe für Flüssigkeiten, insbesondere zur Anwendung in der HPLC-Technik, mit einem Pumpenkopfgehäuse, mit mindestens einer darin angeordneten, einen Verdrängerraum sowie Zu- und Ableitungskanäle enthaltenden Pumpenkopfbüchse, mit einem Tauchkolben für jeden Verdrängerraum, und mit in Aufnahmebohrungen des Pumpenkopfgehäuses angeordneten patronenartigen Ventileinheiten, von denen jede mit ihrem einen Ende an dem Mündungsbereich des (eines) Zuleitungskanales bzw. Ableitungskanales an der (den) Pumpenkopfbüchsen anliegt.

Eine derartige Feindosierpumpe ist wiederum in der deutschen Patentschrift 31 22 091 der Anmelderin beschrieben. Bei dieser bekannten Feindosierpumpe werden die patronenartigen Ventileinheiten durch Kleinfittinge (Fittingschraube mit Schneidring) mit einer Anschlußrohrleitung für das Fördermedium verbunden. Es hat sich jedoch herausgestellt, daß derartige Fitting-Verbindungen bei mehrfachem Festschrauben und Lösen infolge fortschreitender plastischer Deformation an den Schneidringen schnell zur Leckage neigen.

Der Erfindung liegt die weitere Aufgabe zugrunde, die Feindosierpumpe der zuvor beschriebenen Art dahingehend zu verbessern, daß vorstehender Nachteil vermieden wird.

Die Aufgabe ist erfindungsgemäß dadurch gelöst, daß an dem anderen Ende jeder patronenartigen Ventileinheit ein Anschlußrohradapter anliegt, welcher einen abgewinkelten Leitungskanal enthält, der an seinem einen Ende mit der Ventileinheit und an seinem anderen Ende mit einem Anschlußrohr für die zu fördernde Flüssigkeit verbunden ist, und daß auf den Anschlußrohradapter ein Dichtungsdruck ausgeübt wird, mittels welchem eine flüssigkeitsdichte Verbindung der Ventileinheit mit der Pumpenkopfbüchse einerseits und dem Anschlußrohradapter andererseits gewährleistet ist.

Der Dichtungsdruck kann auf den Anschlußrohradapter durch ein am Pumpenkopfgehäuse verankertes Halteelement mittels einer an diesem vorgesehenen Fixierschraube ausgeübt werden.

Das Halterungselement selbst kann in einer ersten Ausführungsform klemmbügelartig gestaltet und dadurch an dem Pumpenkopfgehäuse verankert sein, daß es mit an seinen Bügelenden vorgesehenen Vorsprüngen oder Abkröpfungen in an dem Pumpenkopfgehäuse befindlichen Nuten eingreift oder an dem Pumpenkopfgehäuse befindliche Vorsprünge hintergreift, und daß die den Quersteg des klemmbügelartigen Halterungselementes durchgreifende Fixierschraube direkt auf den zwischengeschalteten Anschlußrohradapter einwirkt.

Eine andere Ausführungsform kann darin bestehen, daß das Halterungselement als L-förmiger Klemmwinkel ausgebildet ist, der aus einem Stützschenkel und einem Fixierschenkel besteht, daß der Stützschenkel mit einer Abkröpfung versehen ist, die in eine entsprechende Ausnehmung bzw. einen Schlitz an dem Pumpenkopfgehäuse eingreift, und daß der Fixierschenkel auf dem zwischen ihm und der Ventileinheit zwischengeschalteten Anschlußrohradapter aufsitzt und von der in das Pumpenkopfgehäuse eingeschraubten Fixierschraube durchgriffen wird, derart, daß die Fixierschraube indirekt auf den Anschlußrohradapter einwirkt.

Die Kraftübertragung vom Fixierschenkel des L-förmigen Klemmwinkels auf den Anschlußrohradapter erfolgt zweckmäßigerweise durch einen fest im Fixierschenkel des Klemmwinkels verankerten Stift mit balligem Ende oder durch eine Kugel, die in ein im Fixierschenkel vorgesehenes Sackloch eingepreßt ist.

Weiterhin ist es vorteilhaft, in jedem Halterungselement
eine Ausnehmung oder einen Schlitz zur Aufnahme des zugeordneten Anschlußrohradapters vorzusehen.

Durch die Verwendung eines Anschlußrohradapters, insbesondere in Verbindung mit einem Halterungselement und
einer Fixierschraube kann nicht nur eine Fittingverbindung vermieden werden, sondern dadurch wird ferner erreicht, daß die Drehbewegung der Fixierschraube sich
nicht auf die patronenartige Ventileinheit überträgt.
Dies ist wichtig, weil die periphere Abdichtung an den
Übergangsstellen mittels Flachdichtungen bewerkstelligt
wird, die optimalerweise zum Erreichen von Dichtigkeit
nur axial vorgespannt werden sollen. Die mit der Pumpenkopfbüchse gepaarte Flachdichtung (Dichtring aus PTFE-
Compound) der patronenartigen Ventileinheiten kommt auf
einer unpolierten, d. h. bewußt relativ rauh gelassenen
Kontaktfläche der Pumpenkopfbüchse zu liegen. Ein Verdrehen der Flachdichtung beim Fixiervorgang auf dieser
Kontaktfläche würde ein angestrebtes oberflächenmäßiges
"Verkeilen" der beiden Oberflächen im Mikrobereich unter
dem Einfluß zum Zweck der Abdichtung aufgebrachten Vorspannung stören.

Die Erfindung betrifft schließlich noch eine Feindosierpumpe für Flüssigkeiten, insbesondere zur Anwendung in
der HPLC-Technik, mit mindestens zwei Verdrängerräumen
die über Zu- und Ableitungskanäle mit Ventileinheiten
verbunden sind, mit einem Kolben für jeden Verdrängerraum, von denen stets mindestens einer fördert, wobei
zur Kompensation des Einflusses der spezifischen Kompressibilität des Fördermediums auf den Pumpwirkungsgrad mindestens ein Kolben vor jedem Förderhub einen Vorkompressionshub ausführt, mit einem Kolbenpositionsgeber, mit einem Fördereinsatzmelder, und mit einer mit dem Kolbenpositionsgeber und dem Fördereinsatzmelder verbundenen Regelschaltung für den Kolbenantrieb zur Regelung der Kolbengeschwindigkeit.

Derartige Feindosierpumpen sind bekannt, beispielsweise wiederum nach der deutschen Patentschrift 27 37 062. Im vorliegenden Fall ist es dabei nicht erforderlich, daß es sich, wie in der deutschen Patentschrift 27 37 062 beschrieben, um eine Doppelkopfpumpe handelt, bei der beide Köpfe mit Ventileinheiten bestückt sind und dadurch wechselweise unabhängig voneinander arbeiten. Die Feindosierpumpe kann auch mit zwei Pumpenköpfen betrieben werden, von denen nur einer mit einer Ventileinheit bestückt ist und die Köpfe in Serie arbeiten, wie dies in der deutschen Patentschrift 32 03 722 beschrieben ist. Angestrebt wird mit solchen Feindosierpumpen ein pulsationsfreier Massenfluß. Dies wird dadurch erreicht, daß vor jedem Förderhub ein Vorkompressionshub ausgeführt wird. Der Vorkompressionshub ist kinematisch, für ein Maximum an Kompressibilität und Arbeitsdruck gewählt, auf der Antriebsnocke für den Kolben vorgegeben. Im Falle nichtmaximaler Arbeitsbedingungen, d. h. bei Nutzung nur eines Teils des mechanisch vorgegebenen Vorkompressionshubes, wird die Geschwindigkeit des Antriebsmotors für den verbleibenden Vorkompressionshub-Bereich so moduliert, daß beide Kolben die gewählte Förderleistung erbringen. Um fortlaufend die jeweils richtige Vorkompression aufzubringen, bedarf es der genauen Bestimmung des Zeitpunktes für das tatsächliche Einsetzen des Fördervorganges. Bei der Feindosierpumpe nach der deutschen Patentschrift 27 37 062 erfolgt dies über eine Druckmessung. Die Gewinnung eines Regelsignales auf Druckwertbasis ist jedoch meßtechnisch schwierig, insbesondere deshalb, weil das Fördermedium im Verdrängerraum Druckschwankungen unterworfen ist, die auf Einflüsse im nachgeordneten System zurückgehen und daher - um eine Druckschwankung als relevant zu kennzeichnen - Zeitfenster und Schwellenwerte vorgegeben werden müssen.

Der Erfindung liegt deshalb die Aufgabe zugrunde, eine pulsationsfreie Feindosierpumpe der zuvor beschriebenen Art zu schaffen, bei der eine genauere Bestimmung des Fördereinsatzes und damit eine verbesserte Regelung möglich ist.

Die Aufgabe ist erfindungsgemäß dadurch gelöst, daß der Fördereinsatzmelder mindestens eine Auslaßventileinheit auf Öffnen abtastet.

Bei Verwendung von Ventileinheiten mit Ventilkugel und entsprechendem Ventilsitz kann die erfindungsgemäße Lösung dadurch realisiert werden, daß der Fördereinsatzmelder auf das Abheben der Ventilkugel mindestens eines Auslaßventils vom Ventilsitz anspricht.

Eine Weiterbildung kann darin bestehen, daß zumindest Teile einer Auslaßventileinheit aus durchsichtigem Material besteht, wobei jedoch die Ventilkugel andersfarbig oder durchsichtig ist, und daß der Fördereinsatzmelder ein optisches Sensorsystem, wie beispielsweise eine Lichtschranke ist, die auf das Abheben der Ventilkugel vom Ventilsitz anspricht. Eine durchsichtige Auslaßventileinheit bietet nicht nur den Vorteil der Möglichkeit einer optischen Abtastung, sondern sie erlaubt bei visueller Zugänglichkeit außerdem, daß das Funktionieren der Ventile von außen überwacht werden kann.

Als Material für die Teile einer durchsichtigen Auslaß-ventileinheit eignet sich insbesondere durchsichtiger Saphir oder durchsichtiges monokristallines Zirkonoxid. Diese Materialien sind nicht nur durchsichtig, sondern ohne Einschränkung auch chemisch inert und außerordentlich hart, was eine hohe Verschleißfestigkeit gewährleistet. Die Ventilkugel kann beispielsweise aus Rubin hergestellt werden, der farbig ist. Dadurch kann die Bewegung der Ventilkugel einwandfrei optisch erfaßt werden.

Eine andere Möglichkeit besteht darin, die Ventilkugel zumindest einer Auslaßventileinheit aus ferromagnetischem Material, vorzugsweise aus speziellem nicht-rostendem Stahl herzustellen. In diesem Falle kann der Fördereinsatzmelder die Bewegung der Ventilkugel magnetisch erfassen. Dem kommt die Verwendung von Saphir oder monokristallinem Zirkonoxid für die Ventilperipherie-Elemente entgegen, da die genannten Materialien nichtmagnetisch sind und dementsprechend auch keine magnetisch abschirmende Wirkung haben.

Alternativ dazu ist es auch möglich, die Ventilkugel aus ferromagnetischem Material herzustellen und mit einem keramischen Werkstoff zu beschichten, beispielsweise mit Titankarbid, das chemisch inert und außerordentlich hart ist.

Ausführungsbeispiele der Erfindung werden nachfolgend anhand der Zeichnungen beschrieben.

Es zeigen:

Fig. 1 einen perspektivischen Teilschnitt durch eine erste Ausführungsform der Feindosierpume;

Fig. 2 eine Explosionsdarstellung der ersten Ausführungsform der Feindosierpumpe;

Fig. 3 die wesentlichen Teile einer zweiten Ausführungsform der Feindosierpumpe in Explosionsdarstellung;

Fig. 4 eine dritte Ausführungsform der Feindosierpumpe
in Explosionsdarstellung;

Fig. 5 eine vierte Ausführungsform der Feindosierpumpe
mit Doppelkopf-Verdrängersystem in Explosionsdarstellung;

Fig. 6 ein Blockschaltbild eines Doppelkopf-Verdrängersystems mit Regelschaltung zur Kompensation der
Kompressibilität der zu fördernden Flüssigkeit im
Verdrängerraum.

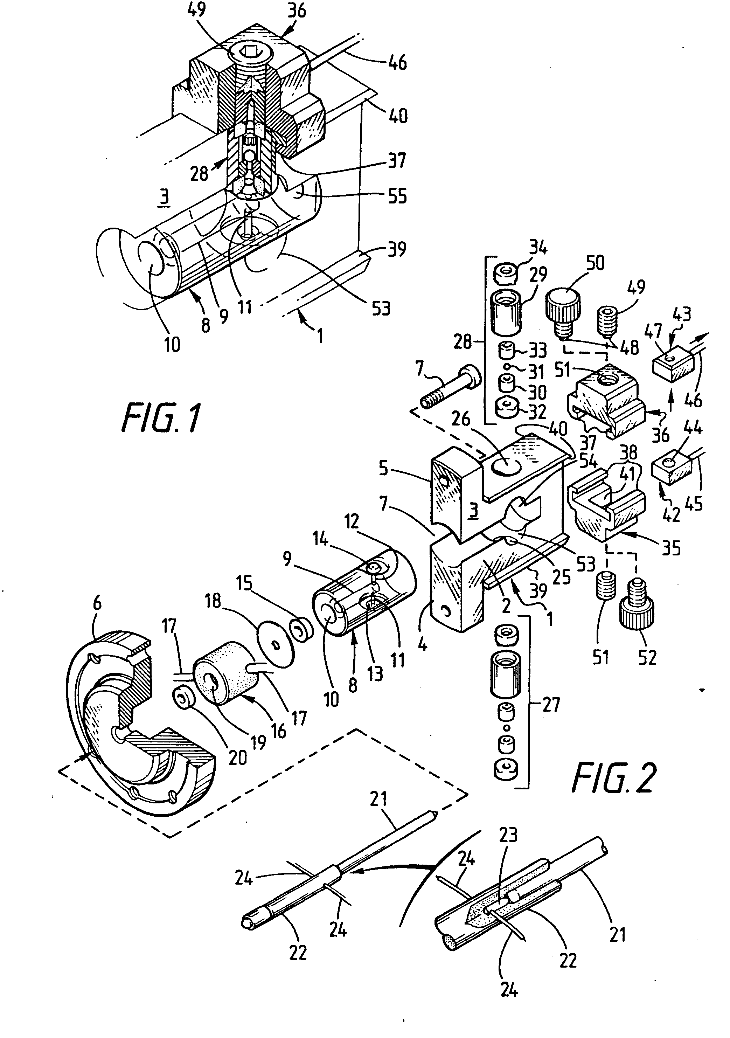

Die in den Fig. 1 und 2 gezeigte Feindosierpumpe weist
ein Pumpenkopfgehäuse 1 auf, das nach Art eines U-förmigen Joches ausgebildet ist. Die Jochschenkel sind mit
2 und 3 bezeichnet. An den freien Enden der Jochschenkel
2 und 3 befinden sich Flanschwinkel 4 und 5 zum Befestigen eines Pumpenkopfschildes 6 mittels Schrauben 7.
Das Pumpenkopfgehäuse 1 und das Pumpenkopfschild 6 bestehen aus nicht-rostendem Stahl, oder chemisch beständigem Kunststoff. Der Spalt 7 zwischen den Jochschenkeln
2, 3 ist als nach den Seiten hin offene Aufnahmebohrung
ausgeführt und dient zur Aufnahme einer zylindrischen
Pumpenkopfbüchse 8.

Die Pumpenkopfbüchse 8 besteht aus synthetischem Saphir
(monokristallines $Al_2O_3$) oder monkristallinem Zirkonoxid
($ZrO_2$). Das Rohstück ist zunächst durchsichtig oder
durchscheinend. Um daraus jedoch die Pumpenkopfbüchse herzustellen, muß es geschliffen werden, wodurch es blind wird. Durch anschließendes Polieren oder Läppen kann es jedoch wieder durchsichtig gemacht werden. Saphir und monokristallines Zirkonoxid sind chemisch inert und außergewöhnlich hart und daher auch bei langdauerndem rauhen Betrieb kratzfest. Die Pumpenkopfbüchse 8 enthält einen axial verlaufenden sacklochförmigen Verdrängerraum 9, der sich am Öffnungsende zu einer Ringnut 10 erweitert. Zum Grund der Sacklochbohrung des Verdrängerraumes 9 führen ein radialer Zuleitungskanal 11 und ein radialer Ableitungskanal 12. An den Stellen, wo der Ableitungskanal 11 und der Zuleitungskanal 12 die Mantelfläche der Pumpenkopfbüchse 8 durchstoßen, weist die Pumpenkopfbüchse kleine, die Öffnungen umgebende Ringwülste 13, 14 auf. Ferner sind die die Ringwülste 13, 14 umgebenden ringförmigen Flächen vom Polieren ausgenommen und bewußt rauh gelassen worden.

Die Wandstärke der Pumpenkopfbüchse kann bei der Wahl dieser Materialien trotz der in der HPLC-Technik verlangten hohen Förderücke relativ gering gewählt werden. Sie kann beispielsweise zwischen 2-8 mm vorzugsweise bei 5 mm liegen; dennoch hält eine solche Pumpenkopfbüchse dann Förderdrücken bis zu 600 bar und darüber stand.

Die Ringnut 10 dient zur Aufnahme einer federgestützten Ringdichtung 15, deren Hülle beispielsweise aus PTFE bestehen kann.

Der Spalt zwischen den beiden Jochschenkeln 2 und 3 des Pumpenkopfgehäuses 1 dient ferner zur Aufnahme einer Kolbenführungshülse 16, die aus keramischem Material, beispielsweise aus gesintertem $Al_2O_3$ bestehen kann und mit Spül- bzw. Drainageanschlußleitungen 17 versehen ist.

Zwischen die Kolbenführungshülse 16 und die Pumpenkopfbüchse 8 ist eine Flachdichtung 18 eingesetzt. Die Kolbenführungshülse 16 ist außerdem an ihrem von der Pumpenkopfbüchse 8 abgewandten Ende mit einer Ringnut 19 versehen, die eine Ringdichtung 20 aufnimmt.

In der Kolbenführungshülse 16 ist ein Kolben 21 geführt, der ebenfalls aus synthetischem Saphir besteht. Er steht mit der Wandung des Verdrängerraumes 9 der Pumpenkopfbüchse 8 nicht in Kontakt, sondern taucht spielfrei in den Verdrängerraum ein (Tauchkolbenprinzip). Der Kolben 21 ist in einem Schaftteil 22 eingespannt, welcher mit einem (hier nicht weiter dargestellten) Antriebsmechanismus verbunden ist. Der Schaftteil 22 enthält eine Leuchtdiode 23, die über elektrische Zuleitungen 24 mit einer Spannungsquelle verbunden sind. Die Leuchtdiode 23 sendet Licht in den aus durchsichtigem Saphir bestehenden Kolben 21, wodurch die Pumpenkopfbüchse 8 von innen beleuchtet wird.

Die beiden Jochschenkel 2, 3 der Pumpenkopfbüchse 1 sind ferner mit Aufnahmebohrungen 25, 26 versehen, die senkrecht zur Achse der Pumpenkopfbüchse 8 liegen. Die Aufnahmebohrung 25 dient zur Aufnahme einer patronenförmigen Einlaß-Ventileinheit 27. Die Aufnahmebohrung 26 dient zur Aufnahme einer patronenförmigen Auslaßventileinheit 28. Beide Ventileinheiten enthalten gleiche Bauteile, deren Anordnung zueinander je nach Ein- oder Auslaßkonfiguration unterschiedlich ist. Es genügt aber, die Auslaß-Ventileinheit 28 zu beschreiben.

Die Auslaß-Ventileinheit 28 besteht aus einem hohlzylinderförmigen Ventilpatronengehäuse 29, das ein Kugelführungselement 33 mit angearbeitetem Kugelstopp enthält. In dem Kugelführungselement 33 sitzt eine bewegliche Ventilkugel 31. Das Kugelführungselement 33 stößt mit seinem offenen Ende an einen Ventilsitz 30. Das geschlossene Ende des Kugelführungselementes 33 weist einen kreuzgeschlitzten oder siebplattenförmigen Abschluß als Kugelstopp auf. Beide Öffnungen des Ventilpatronengehäuses 29, das den Ventilsitz 30 mit Kugel 31 und das Kugelführungselement 33 aufnimmt, sind durch Dichtungsringe 32, 34 verschlossen. Das Ventilpatronengehäuse 29, der Ventilsitz 30 und das Kugelführungselement 33 bestehen aus durchsichtigem Material, vorzugsweise aus dem gleichen, wie die Pumpenkopfbüchse 8, z. B. aus synthetischem Saphir oder monokristallinem Zirkonoxid. Die Kugel 31 besteht aus Rubin. Sie ist rot und daher klar von den zuvor genannten zugehörigen Teilen zu unterscheiden. Die beiden Dichtungsringe bestehen aus einem PTFE-Compound.

Die beiden Jochschenkel 2, 3 des Pumpenkopfgehäuses 1 sind mit Querschlitzungen 53, 54 versehen, welche denjenigen Teil des Ventilpatronengehäuses visuell zugänglich machen, der das Kugelführungselement 33 und insbesondere den Ventilsitz 30 und die Kugel 31 umfaßt. Dadurch ist die Bewegung der Kugel 31 in der Auslaß-Ventileinheit 28 erkennbar. Der Dichtungsring 32 sitzt auf der rauh belassenen Kontaktfläche der Pumpenkopfbüchse 8 auf, die den Ringwulst 14 umgibt.

Zum Fixieren der patronenartigen Ventileinheiten 27, 28 in den Aufnahmebohrungen 25, 26 dienen Klemmbügel 35, 36. Diese sind an ihren Bügelenden mit Abkröpfungen 37, 38 versehen, welche hinterschnittene Nuten bilden. Das Pumpenkopfgehäuse 1 ist in einem quer zur Achse der Pumpenkopfbüchse 8 verlaufenden Schnitt doppel-T-förmig gestaltet. Die beiden Klemmbügel 35, 36 werden mit den hinterschnittenen Nuten auch auf die durch den Doppel-T-Schnitt gebildeten Querstege 39, 40 geschoben, wobei die Abkröpfungen 37, 38 die Querstege 39, 40 hintergreifen.

Ferner weisen die Klemmbügel 37, 38 an ihrer Innenseite Ausnehmungen auf, von denen in Fig. 2 nur die Ausnehmung 41 am Klemmbügel 35 sichtbar ist. In diese Ausnehmungen werden Anschlußrohradapter 42, 43 eingesetzt.

Die Anschlußrohradapter 42, 43 enthalten einen abgewinkelten Leitungskanal, der an seinem einen Ende die der betreffenden Ventileinheit zugewandte Seite des Anschlußrohradapters durchstößt und von einem Ringwulst umgeben ist, und der an seinem anderen Ende mit einem Anschlußrohr für das Fördermedium verbunden ist. Bei dem Anschlußrohradapter 42 ist der Ringwulst mit 44 und das Anschlußrohr mit 45 bezeichnet. Bei dem Anschlußrohradapter 43 ist der Ringwulst nicht erkennbar; das Anschlußrohr ist hier mit 46 bezeichnet. Der Strom des Fördermediums an dem mit der Auslaß-Ventileinheit verbundenen Anschlußrohradapter 43 ist durch Pfeile dargestellt. Der Anschlußrohradapter 43 läßt noch erkennen, daß an der der zugehörigen Ventileinheit 28 abgewandten Seite eine Eindellung 47 vorgesehen ist, in die ein ballig geformter Zapfen 48 einer Innensechskant-Madenschraube 49 oder einer statt dieser verwendeten Rändelschraube 50 eingreifen kann. Die Madenschraube 49 oder die Rändelschraube 50 werden in ein durchgehendes Gewindeloch 51 eingeschraubt, welches im Klemmbügel 36 vorgesehen ist. Die Madenschraube 49 bzw. die Rändelschraube 50 pressen dabei den Anschlußrohradapter 43, die Auslaß-Ventileinheit 28 und die Pumpenkopfbüchse 8 fest aufeinander, derart, daß eine leckfreie Verbindung zwischen dem Verdrängerraum 9 und dem Anschlußrohr 46 gewährleistet ist. Für den Klemmbügel 35 ist analog eine Innensechskant-Madenschraube 51 bzw. eine Rändelschraube 52 vorgesehen. Die Verwendung von Innensechskantschrauben bzw. von Rändelschrauben ermöglicht ein besonders feinfühliges Fixieren der Ventilpatronen, was ein peripheres Abdichten ohne übermäßiges mechanisches Vorspannen der Ventile gegenüber der Pumpenkopfbüchse zuläßt. Durch das Zwischenschalten der in den zugehörigen Klemmbügeln arretierten Anschlußrohradaptern wird ferner erreicht, daß die Drehbewegung der Fixierschrauben sich nicht auf die Ventilpatronen überträgt. Dies ist wichtig, weil die periphere Abdichtung an den Übergangsstellen mittels Flachdichtungen bewerkstelligt wird, die optimalerweise zum Erreichen von Dichtigkeit nur axial vorgespannt werden sollen. Die mit der Pumpenkopfbüchse gepaarte Flachdichtung 32 der Auslaß-Ventileinheit 28 und die entsprechende Flachdichtung der Einlaß-Ventileinheit 27 kommen auf den unpolierten, d. h. bewußt relativ rauh belassenen Kontaktflächen zu liegen. Ein Verdrehen der Flachdichtungen bei Fixiervorgang auf diesen Kontaktflächen würde ein angestrebtes oberflächenmäßiges "Verkeilen" der beiden Oberflächen im Mikrobereich unter dem Einfluß der zum Abdichten aufgebrachten Vorspannung stören. Der Einsatz von Anschlußrohradaptern läßt weiterhin die bisher üblichen Kleinfittings (Fittingschraube mit Schneidring) vermeiden, die bei mehrfachem Festschrauben und Lösen infolge fortlaufender plastischer Deformation an den Schneidringen schnell zur Leckage neigen.

Bei der zuvor beschriebenen Feindosierpumpe ist die Pumpenkopfbüchse 8 durch den Spalt zwischen den Jochschenkeln 2, 3 des Pumpenkopfgehäuses 1 visuell zugänglich. Da die Pumpenkopfbüchse 8 aus durchsichtigem Material besteht, können die Kolbenbewegungen bzw. der Fördervorgang beobachtet werden. Insbesondere ist das Auftreten von Kavitation und/oder das Hängenbleiben von Luftblasen, die über den Saugstrom in den Verdrängerraum 9 gelangen, ersichtlich. Erkennbar sind ferner der Zustand der Kolbendichtung, das Ausmaß der Abriebbildung an der Dichtung und die Bildung von Ablagerungen auf dem Kolben.

Durch die Querschlitzungen 39, 54 kann ferner das einwandfreie Funktionieren der Ventileinheiten 27, 28 visuell überwacht werden. Die visuelle Überwachung wird erleichtert durch die Ausleuchtung der Pumpenkopfbüchse 8 über den Kolben 21. Statt den Kolben 21 zu beleuchten, ist es auch möglich, im Bogenbereich des Pumpenkopfgehäuses 1 ein Schauloch 55 vorzusehen (siehe Fig. 1), in welches eine (nicht dargestellte) Lichtquelle eingesteckt wird.

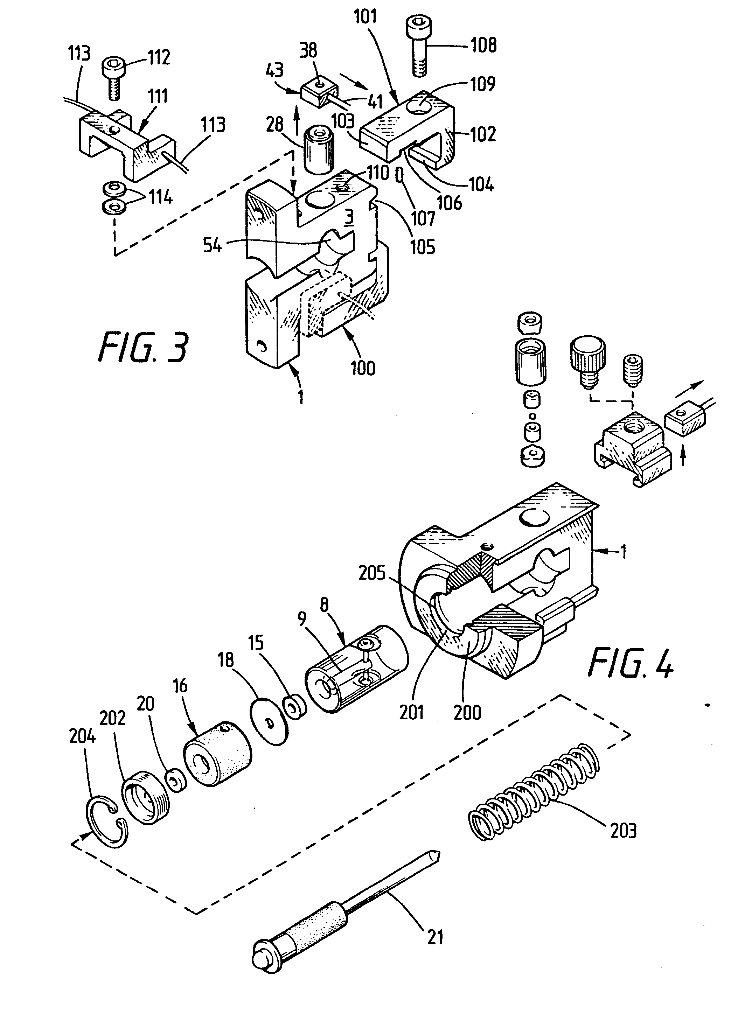

Bei der in Fig. 3 dargestellten zweiten Ausführungsform der erfindungsgemäßen Feindosierpumpe sind statt der Klemmbügel L-förmige Klemmwinkel 100, 101 vorgesehen. Da die Klemmwinkel 100, 101 gleich gestaltet sind, soll nur der Klemmwinkel 101 genauer erläutert werden. Dieser besteht aus einem Stützschenkel 102 und einem Fixierschenkel 103. An dem Stützschenkel 102 ist eine Abkröpfung 104 vorgesehen, die in einen Schlitz 105 des Pumpenkopfgehäuses, das hier ebenfalls mit 1 bezeichnet ist, eingreift.

Zur Aufnahme des Anschlußrohradapters 43, dessen Anschlußrohr 41 hier zur Seite gerichtet ist, ist in dem Fixierschenkel 103 ein Schlitz 106 vorgesehen. Im Fixierschenkel 103 ist ein Stift 107 verankert, dessen freies Ende ballig gestaltet ist. Mit diesem balligen Ende greift der Stift 107 in die Ausnehmung 38 des Anschlußrohradapters 43 ein. Die Klemmung erfolgt hier indirekt mittels einer Fixierschraube 108, die eine Bohrung 109 im Fixierschenkel 103 des Klemmwinkels 101 durchgreift und in eine Gewindebohrung 110 des Pumpenkopfgehäuses 1 eingeschraubt ist. Neu gegenüber der Ausführungsform nach den Fig. 1 und 2 ist bei der Ausführungsform gemäß Fig. 3 ferner ein sattelartiger Aufsatz 111, der mittels einer Schraube 112 auf den oberen Jochschenkel des Pumpenkopfgehäuses 1 aufgeschraubt wird. Dieser sattelartige Aufsatz 111 enthält eine (nicht erkennbare) Lichtschranke, die die Bewegung der Kugel in der durchsichtigen Auslaß-Ventileinheit 28 durch die Querschlitzung 54 in dem Jochschenkel 3 des Pumpenkopfgehäuses 1 überwacht. Die Zu- und Ableitung von Licht zur der Lichtschranke erfolgt über Lichtleitfasern 113. Selbstverständlich kann die Lichtschranke auch von einer Fotodiode und einer Fotozelle gebildet werden. Zwischen dem sattelartigen Aufsatz 111 und dem oberen Jochschenkel 103 des Pumpenkopfgehäuses 1 sind Tellerfedern 114 zwischengeschaltet. Diese ermöglichen es durch mehr oder weniger festes Anziehen der Schraube 112 die Höhe des sattelartigen Aufsatzes 111 einzustellen, derart, daß die Lichtschranke genau den Bewegungsbereich der Kugel der Ventileinheit 28 kreuzt.

Mit Hilfe der Lichtschranke kann ein elektrooptisches Steuersignal für eine Regelschaltung zur Kompensation der spezifischen Kompressibilität des Fördermediums auf den Pumpenwirkungsgrad bei hohen und höchsten Förderdrücken gewonnen werden. Es ist auch möglich, die Bewegung der Kugel der Ventileinheit 28 auf andere Weise zu erfassen, beispielsweise durch einen elektrischen oder einem magnetischen Sensor. In diesem Falle müßte die Kugel aus entsprechendem metallischem Material, beispielsweise aus Stahl sein.

Die in Fig. 4 gezeigte dritte Ausführungsform der Erfindung unterscheidet sich von der in Fig. 1 gezeigten Ausführungsform dadurch, daß das Pumpenkopfschild 200 hier einstückig mit dem Pumpenkopfgehäuse 1 verbunden ist. Das Pumpenkopfschild weist eine Einführöffnung 201 auf, durch die die Pumpenkopfbüchse 8, der Dichtungsring 15, die Dichtungsscheibe 18, die Kolbenführungshülse 16 mit Dichtungsring 20 eingeführt werden können. Vor die Kolbenführungshülse 16 wird noch ein Widerlager 202 für eine Rückholfeder 203 gesetzt. Die Rückholfeder 203 dient dazu, den Kolben 21 unter Vorspannung zu setzen, derart, daß er aus dem Verdrängerraum 9 der Pumpenkopfbüchse 8 herausgedrückt wird, wenn die (nicht dargestellte) Antriebsnocke für den Kolben 21 dies zuläßt. Die in das Pumpenkopfgehäuse 1 eingeführten Teile werden darin durch einen Sprengring 204 festgehalten, der in einer Ringnut einrastet, die sich in der Öffnung 201 des Pumpenkopfschildes 200 befindet.

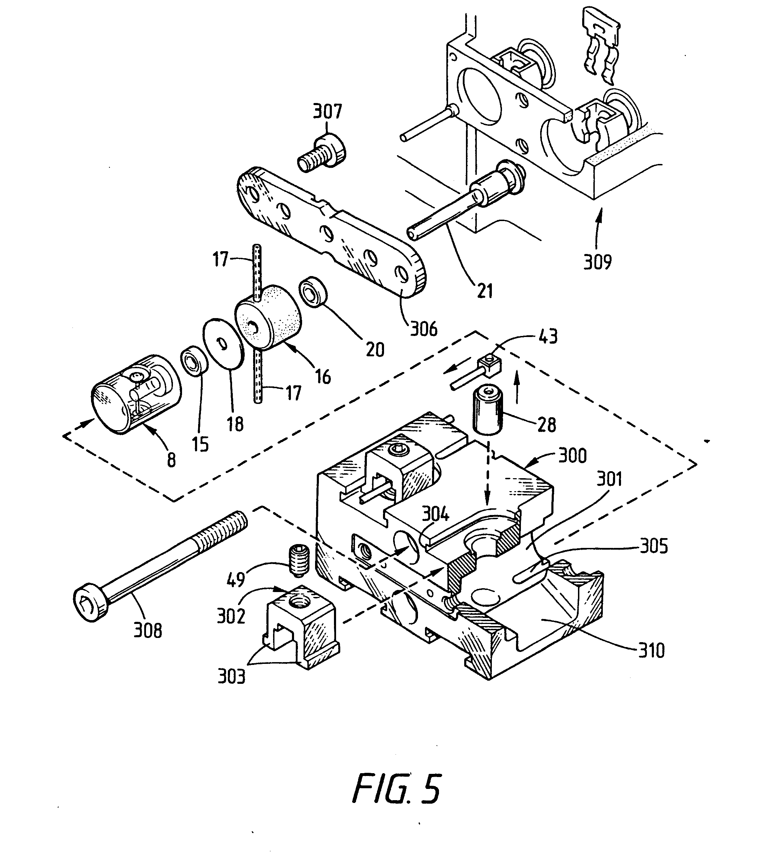

Bei der in Fig. 5 gezeigten vierten Ausführungsform der Erfindung ist die Feindosierpumpe als Doppelkopfsystem ausgebildet. Das Pumpenkopfgehäuse 300 ist hier blockförmig gestaltet und mit zwei Aufnahmebohrungen für jeweils eine von zwei Pumpenkopfbüchsen 8 versehen. Erkennbar ist nur eine Aufnahmebohrung 301. Die Ventileinheiten sind hier analog wie in den Fig. 1 und 2 am Pumpenkopfgehäuse 300 befestigt. Erkennbar sind die Ventileinheit 28 und der Anschlußrohradapter 43. Beide werden mittels eines Klemmbügels 302 und einer Innensechskant-Madenschraube 49 aufeinandergepreßt und gegen die Pumpenkopfbüchse 8 gedrückt. Im Unterschied zu Fig. 1 sind die Abkröpfungen 303 an den Enden der Klemmbügel 302 hier lediglich nach außen gerichtet und in hinterschnittene Nuten 304 am Pumpenkopfgehäuse 300 eingeführt.

Das Pumpenkopfgehäuse 300 ist ferner mit Einschlitzungen 305 für die Spül- bzw. Drainageleitungen 17 versehen, die zu der Kolbenführungshülse 16 führen bzw. von dieser abgehen. Die in die Aufnahmebohrungen 301 eingeführten Teile werden darin mittels eines Riegelelementes 306 fixiert, das mit Schrauben 307 an dem Pumpenkopfgehäuse 300 angeschraubt ist. Weitere Schrauben 308 durchgreifen das Pumpenkopfgehäuse 300, um dieses an einer Antriebseinheit 309 für die Kolben 21 festzuschrauben.

Die Pumpenkopfbüchsen 8 sind bei der in Fig. 5 gezeigten Ausführungsform durch seitliche, sich nach innen konisch verjüngende Schlitze 310 im Pumpenkopfgehäuse 300 visuell zugänglich. Eine visuelle Zugänglichkeit der Ventileinheiten ist hier nicht gegeben, kann aber bei Bedarf geschaffen werden.

Die peripheren Bauteile sind bei allen vier Ausführungsformen aus nicht-rostendem Stahl gefertigt. Für den Fall notwendiger höchster chemischer Inertheit können die fördermediumsberührten Anschlußrohradapter 42, 43 und die Ventilpatronengehäuse 29 aus Titan oder Tantal hergestellt werden. Gleiches gilt auch für die Anschlußrohre 45, 46. Die Klemmbügel 35, 36 bzw. 302 oder die L-förmigen Klemmelemente 100, 102 können aus nicht-rostendem Stahl oder chemisch beständigem faserverstärktem Kunststoff hergestellt werden. Letzterer ermöglicht eine Herstellung im Spritzgußverfahren. Dies gilt auch für das Pumpenkopfgehäuse als solches.

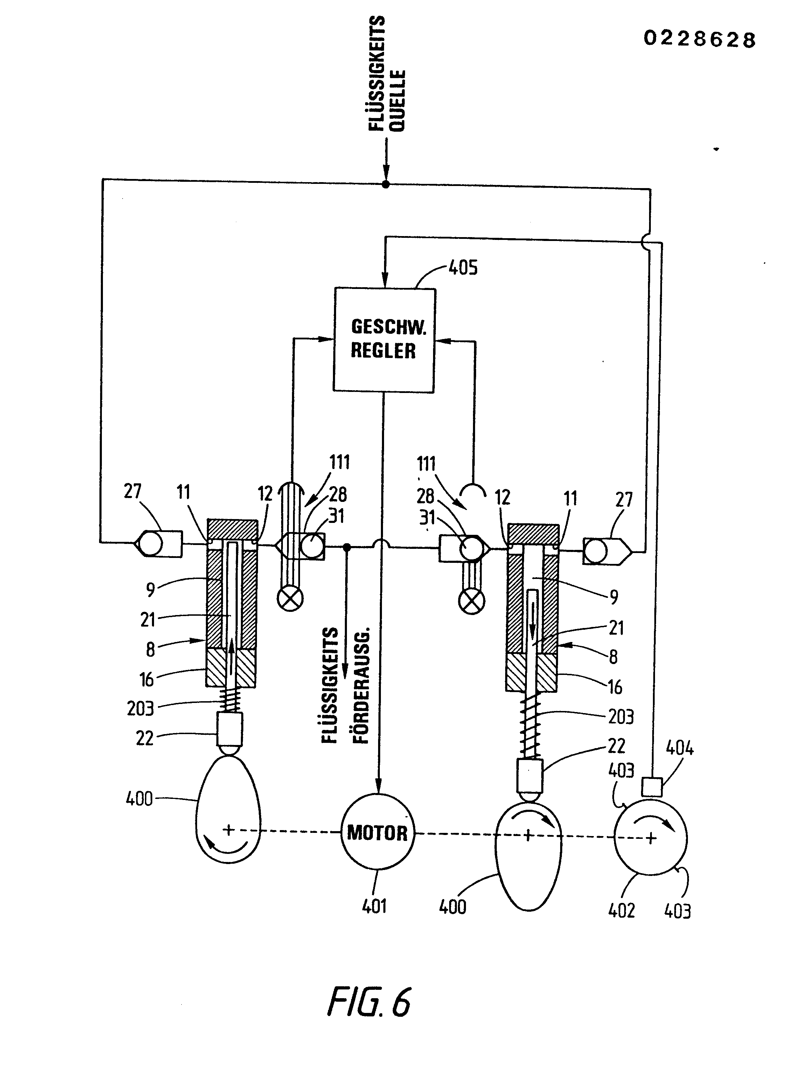

Das Doppelkopf-Verdrängersystem nach Fig. 6 zeigt zwei Pumpenkopfbüchsen 8. Die Einlaßventileinheit 27 der einen Pumpenkopfbüchse arbeitet mit der Auslaßventileinheit 28 der anderen im alternierenden Betrieb zusammen. Die Tauchkolben 21 der beiden Pumpenkopfbüchsen werden durch Nocken 400 angetrieben, derart, daß mit einer gewissen Überlappung jeweils ein Verdrängersystem fördert, während das andere Verdrängersystem saugt.

Das Nockenprofil ist dabei so gestaltet, daß jedes Verdrängersystem vor dem eigentlichen Förderhub einen Vorkompressionshub ausführt. Dies geschieht, um den Fördereinbruch zu vermeiden, der bei erhöhtem Arbeitsdruck infolge der spezifischen Kompressibilität des Fördermediums jeweils zu Beginn des Förderhubes auftritt und eine Restpulsation des Förderstroms bedingt. Dieses Prinzip der Kompressibilitätskompensation ist genauer in der deutschen Patentschrift 27 37 062 beschrieben.

Beide Nocken 400 werden von einem Motor 401 angetrieben, welcher seinerseits durch einen Geschwindigkeitsregler 405 gesteuert ist. Der Geschwindigkeitsregler 405 ist mit die Auslaßventileinheiten 28 abtastenden optischen Sensorsystemen 111 und ferner mit einem Kolbenpositionsgeber 404 verbunden. Der Kolbenpositionsgeber 404 tastet ein auf der Achse des Motors 401 und der Nocken 400 sitzendes Geberrad 402 mit zwei diametral gegenüberliegenden Stiften 403 ab. Die Stifte sind so auf dem Geberrad 402 angeordnet, daß sie den Kolbenpositionsgeber 404 zu Beginn des Vorkompressionshubes des zugeordneten Verdrängersystems passieren. Von den optischen Sensorsystemen 111 erhält der Geschwindigkeitsregler 405 die Meldung, wenn ein Verdrängersystem tatsächlich zu fördern beginnt. Dann nämlich hebt die betreffende Ventilkugel der Auslaßventileinheit 28 vom Ventilsitz ab und gibt die Lichtschranke frei. Aus dem zeitlichen Abstand zwischen dem Beginn des Vorkompressionshubes und dem tatsächlichen Einsetzen der Förderung errechnet der Geschwindigkeitsregler die aufzubringende Vorkompression und moduliert für den verbleibenden Vorkompressions-Bereich, der nicht mehr zum Vorkomprimieren gebraucht wird, die Geschwindigkeit des Antriebsmotors, derart, daß beide Kolben die gewählte Förderleistung erbringen. Zusätzlich leitet der Geschwindigkeitsregler 405 einen Korrekturfaktor ab, der der Motorgeschwindigkeit überlagert wird, um die Mehrförderung aufgrund des Vorkomprimierens bezogen auf Volumen bei Atmosphärendruck ausgleicht. Hierdurch wird insgesamt ein konstanter, pulsfreier Massenfluß erreicht.

Das optische Sensorsystem 111 kann - wie dargestellt - aus einer Lichtquelle und einem Lichtempfänger bestehen, die auf entgegengesetzten Seiten der betreffenden Ventileinheit angeordnet sind. Das System arbeitet dann nach dem Durchlicht-Prinzip. Möglich ist aber auch eine Ausführungsform, die nicht auf dem Unterbrechen eines Lichtstrahles beruht, sondern auf der Veränderung der Brechungsverhältnisse im Ventilraum infolge des Schließens und Öffnens der Kugel (Reflexions-Prinzip).

Ansprüche

1. Feindosierpumpe für Flüssigkeiten, insbesondere zur Anwendung in der HPLC-Technik, mit einem Pumpenkopfgehäuse (1; 300) mit mindestens einer darin angeordneten, einen Verdrängerraum (9) sowie Zu- und Ableitungskanäle (11, 12) enthaltenden Pumpenkopfbüchse (8) und mit einem Tauchkolben (21) für jeden Verdrängerraum (9), wobei Pumpenkopfbüchse(n) (8) und Tauchkolben (9) aus chemisch inertem Material bestehen, dadurch gekennzeichnet, daß das Material der Pumpenkopfbüchse(n) (8) durchsichtig ist und daß das Pumpenkopfgehäuse (1; 300) mit mindestens einer Öffnung (7) oder Ausnehmung (310) versehen ist, durch welche die Pumpenkopfbüchse(n) (8) von außen sichtbar ist (sind).

2. Feindosierpumpe, insbesondere nach Anspruch 1, dadurch gekennzeichnet, daß die Pumpenkopfbüchse(n) (8) aus durchsichtigem synthetischem Saphir oder durchsichtigem monokristallinem Zirkonoxid besteht (bestehen).

3. Feindosierpumpe nach Anspruch 1 oder 2, dadurch gekennzeichnet, daß das Pumpenkopfgehäuse (8) für Einzelkopf-Verdrängersysteme nach Art eines U-förmigen Joches ausgebildet ist, wobei die Pumpenkopfbüchse (8) in dessen zentraler Aussparung angeordnet und durch den von den Jochschenkeln (2, 3) gebildeten Spalt (7) sichtbar ist.

0228628

4. Feindosierpumpe nach Anspruch 1 oder 2, dadurch gekennzeichnet, daß das Pumpenkopfgehäuse (300) für Doppelkopf-Verdrängersystemeblockförmig ausgebildet und mit Aussparungen (301) zur Aufnahme der Pumpenkopfbüchsen (8) versehen ist, und daß zu jeder Aussparung (301) ein Sehschlitz (310) führt, durch den die in der Aussparung (301) befindliche Pumpenkopfbüchse (8) sichtbar ist.

5. Feindosierpume nach einem der vorherstehenden Ansprüche, dadurch gekennzeichnet, daß das Pumpenkopfgehäuse (1; 300) Aufnahmebohrungen (25, 26) für patronenartige Ventileinheiten (27, 28) aufweist, von denen jede mit dem Zuleitungskanal (11) bzw. dem Ableitungskanal (12) der (einer) Pumpenkopfbüchse (8) in Verbindung steht.

6. Feindosierpumpe, insbesondere nach Anspruch 5, dadurch gekennzeichnet, daß jede Ventileinheit (27, 28) durch ein an dem Pumpenkopfgehäuse (1; 300) verankerbares Halterungselement (35, 36; 101, 302) in der ihr zugeordneten Aufnahmebohrung (25, 26) gehalten und zwecks Verbindung mit dem Zuleitungskanal (11) bzw. Ableitungskanal (12) gegen die Pumpenkopfbüchse (8) gedrückt wird, daß zwischen jede Ventileinheit (27, 28) und dem zugehörigen Halterungselement (35, 36; 101, 302) ein Anschlußrohradapter (42, 43) zwischengeschaltet ist, welcher einen abgewinkelten Leitungskanal enthält, der an seinem einen Ende mit der Ventileinheit (27, 28) und an seinem anderen Ende mit einem Anschlußrohr (46) für das Fördermedium verbunden ist, und daß der Anschlußrohradapter (42, 43), die Ventileinheit (27, 28) und die Pumpenkopfbüchse (8) mittels einer das Halterungselement (35, 36; 101, 302) durchgreifenden Fixierschraube (49, 50, 51, 52, 108) aufeinanderpreßbar sind.


7. Feindosierpumpe nach Anspruch 6,
dadurch gekennzeichnet,
daß das Halterungselement (35, 36) für eine Ventileinheit (27, 28) klemmbügelartig gestaltet und dadurch an
dem Pumpenkopfgehäuse (1; 300) verankert ist, daß es
mit an seinen Bügelenden vorgesehenen Vorsprüngen oder
Abkröpfungen (37, 38; 303) in an dem Pumpenkopfgehäuse
(1; 300) befindlichen Nuten (304) eingreift oder an den
Pumpenkopfgehäuse befindliche Vorsprünge (39, 40) hintergreift, und daß die den Quersteg des klemmbügelartigen Halterungselementes (35, 36) durchgreifende Fixierschraube (49, 50, 51, 52) direkt auf den zwischengeschalteten Anschlußrohradapter (42, 43) einwirkt.


8. Feindosierpumpe nach Anspruch 6,
dadurch gekennzeichnet,
daß das Halterungselement für eine Ventileinheit (27,
28) als L-förmiger Klemmwinkel (101) ausgebildet ist,
der aus einem Stützschenkel (102) und einem Fixierschenkel (103) besteht, daß der Stützschenkel (102) mit einer
Abkröpfung (104) versehen ist, die in eine entsprechende
Ausnehmung bzw. einen Schlitz (105) an dem Pumpenkopfgehäuse (1) eingreift und daß der Fixierschenkel auf dem
zwischen ihm und der Ventileinheit (27, 28) zwischengeschalteten Anschlußrohradapter (42, 43) aufsitzt und von
der in das Pumpenkopfgehäuse (1) eingeschraubten Fixierschraube (108) durchgriffen wird, derart, daß die Fixierschraube (108) indirekt auf den Anschlußrohradapter (42,
43) einwirkt.


9. Feindosierpumpe nach Anspruch 8,
dadurch gekennzeichnet,

daß die Kraftübertragung vom Fixierschenkel (103) des L-förmigen Klemmwinkels (101) auf den Anschlußrohradapter (42, 43) durch einen fest im Fixierschenkel (103) des Klemmwinkels (101) verankerten Stift (107) mit balligem Ende oder eine Kugel erfolgt, die in ein im Fixierschenkel (103) vorgesehenes Sackloch eingepreßt ist.

10. Feindosierpumpe nach einem der Ansprüche 7 bis 9,
dadurch gekennzeichnet,
daß in jedem Halterungselement (35, 36; 101, 302) eine Ausnehmung (41) oder ein Schlitz (106) zur Aufnahme des zugeordneten Anschlußrohradapters (42, 43) vorgesehen ist.

11. Feindosierpumpe, insbesondere nach einem der Ansprüche 5 bis 10,
dadurch gekennzeichnet,
daß die Ventileinheiten (27, 28) aus durchsichtigem Material bestehen, wobei jedoch die Ventilkugeln (31) andersfarbig oder undurchsichtig sind, und daß das Pumpenkopfgehäuse (1) mit Ausnehmungen (53, 54) oder Schaulöchern versehen ist, durch die die Ventileinheiten (27, 28) sichtbar sind.

12. Feindosierpumpe nach Anspruch 11,
dadurch gekennzeichnet,
daß zumindest ein Teil der Bauteile der Ventileinheiten (27, 28) aus durchsichtigem Saphir oder durchsichtigem monokristallinem Zirkonoxid bestehen, und daß die Ventilkugeln (31) aus Rubin bestehen.

13. Feindosierpumpe nach Anspruch 11 oder 12,
dadurch gekennzeichnet,
daß zumindest im Bereich der Auslaß-Ventileinheit (28) ein optisches Sensorsystem, wie beispielsweise eine Lichtschranke (111) angeordnet ist, die auf die Funktion der Ventileinheit (28), insbesondere das Abheben der Ventilkugel (31) vom Ventilsitz anspricht.

14. Feindosierpumpe nach Anspruch 13,
dadurch gekennzeichnet,
daß das optische Sensorsystem bzw. die Lichtschranke (111) zur Istwertgewinnung für das tatsächliche Einsetzen des Fördervorganges in einer Regelschaltung verwendet ist, mittels welcher die Kolbengeschwindigkeit zwecks Kompensation des Einflusses der spezifischen Kompressibilität des Fördermediums auf den Pumpenwirkungsgrad im Verdrängerraum geregelt wird.

15. Feindosierpumpe nach einem der vorherstehenden Ansprüche,
dadurch gekennzeichnet,
daß der Tauchkolben (21) aus durchsichtigem Material, vorzugsweise aus Saphir oder monokristallinem Zirkonoxid besteht und daß in der Einspannung bzw. der Schaft (22) des Tauchkolbens (21) eine Lichtquelle (23) zur Einleitung von Licht in den Tauchkolben (21) angeordnet ist.

16. Feindosierpumpe nach einem der vorhergehenden Ansprüche,
dadurch gekennzeichnet,
daß das Pumpenkopfgehäuse (1) mit mindestens einer zu der (den) aus Aussparung(en) (7) für die Pumpenkopfbüchse(n) (8) führenden Bohrung (55) versehen ist, welche zur Aufnahme einer Lichtquelle dient, die die Pumpenkopfbüchse(n) (8) beleuchtet.

17. Feindosierpumpe für Flüssigkeiten, insbesondere zur Anwendung in der HPLC-Technik, mit einem Pumpenkopfgehäuse (1; 300) mit mindestens einer darin angeordneten, einen Verdrängerraum (9) sowie Zu- und Ableitungskanäle (11, 12) enthaltenden Pumpenkopfbüchse (8), mit einem Tauchkolben (21) für jeden Verdrängerraum (9), und mit in Aufnahmebohrungen (25, 26) des Pumpenkopfgehäuses (1; 300) angeordneten patronenartigen Ventileinheiten (27, 28), von denen jede mit ihrem einen Ende an dem Mündungsbereich des (eines) Zuleitungskanales bzw. Ableitungskanales (11, 12) an der (den) Pumpenkopfbüchse(n) (8) anliegt,

dadurch gekennzeichnet,

daß an dem anderen Ende jeder patronenartigen Ventileinheit (27, 28) ein Anschlußrohradapter (42, 43) anliegt, welcher einen abgewinkelten Leitungskanal enthält, der an seinem einen Ende mit der Ventileinheit (27, 28) und an seinem anderen Ende mit einem Anschlußrohr (45, 46) für die zu fördernde Flüssigkeit verbunden ist, und daß auf den Anschlußrohradapter (42, 43) ein Dichtungsdruck ausgeübt wird, mittels welchem eine flüssigkeitsdichte Verbindung der Ventileinheit (27, 28) mit der Pumpenkopfbüchse (8) einerseits und dem Anschlußrohradapter (42, 43) andererseits gewährleistet ist.

18. Feindosierpumpe nach Anspruch 17,
dadurch gekennzeichnet,
daß der Dichtungsdruck auf den Anschlußrohradapter (42, 43) durch ein am Pumpenkopfgehäuse (1; 300) verankertes Halterungselement (35, 36; 100; 101; 302) mittels einer an diesem vorgesehenen Fixierschraube (49, 50; 51, 52; 108) ausgeübt wird.

19. Feindosierpumpe nach Anspruch 18,
dadurch gekennzeichnet,
daß das Halterungselement (35, 36) für eine Ventileinheit (27, 28) klemmbügelartig gestaltet und dadurch an dem Pumpenkopfgehäuse (1; 300) verankert ist, daß es mit an seinen Bügelenden vorgesehenen Vorsprüngen oder Abkröpfungen (37, 38; 303) in an dem Pumpenkopfgehäuse (1; 300) befindlichen Nuten (304) eingreift oder an den Pumpenkopfgehäuse befindliche Vorsprünge (39, 40) hintergreift, und daß die den Quersteg des klemmbügelartigen Halterungselementes (35, 36) durchgreifende Fixierschraube (49, 50, 51, 52) direkt auf den zwischengeschalteten Anschlußrohradapter (42, 43) einwirkt.

20. Feindosierpumpe nach Anspruch 18,
dadurch gekennzeichnet,
daß das Halterungselement für eine Ventileinheit (27, 28) als L-förmiger Klemmwinkel (101) ausgebildet ist, der aus einem Stützschenkel (102) und einem Fixierschenkel (103) besteht, daß der Stützschenkel (102) mit einer Abkröpfung (104) versehen ist, die in eine entsprechende Ausnehmung bzw. einen Schlitz (105) an dem Pumpenkopfgehäuse (1) eingreift und, daß der Fixierschenkel auf dem zwischen ihm und der Ventileinheit (27, 28) zwischengeschalteten Anschlußrohradapter (42, 43) aufsitzt und von der in das Pumpenkopfgehäuse (1) eingeschraubten Fixierschraube (108) durchgriffen wird, derart, daß die Fixierschraube (108) indirekt auf den Anschlußrohradapter (42, 43) einwirkt.

21. Feindosierpumpe nach Anspruch 20,
dadurch gekennzeichnet,
daß die Kraftübertragung vom Fixierschenkel (103) des L-förmigen Klemmwinkels (101) auf den Anschlußrohradapter (42, 43) durch einen fest im Fixierschenkel (103) des Klemmwinkels (101) verankerten Stift (107) mit balligem Ende oder eine Kugel erfolgt, die in ein im Fixierschenkel (103) vorgesehenes Sackloch eingepreßt ist.

22. Feindosierpumpe nach einem der Ansprüche 19 bis 21, dadurch gekennzeichnet, daß in jedem Halterungselement (35, 36; 101, 302) eine Ausnehmung (41) oder ein Schlitz (106) zur Aufnahme des zugeordneten Anschlußrohradapters (42, 43) vorgesehen ist.

23. Feindosierpumpe für Flüssigkeiten, insbesondere zur Anwendung in der HPLC-Technik, mit mindestens zwei Verdrängerräumen (9), die über Zu- und Ableitungskanäle (11, 12) mit Ventileinheiten (27, 28) verbunden sind, mit einem Kolben (21) für jeden Verdrängerraum (9), von denen stets mindestens einer fördert, wobei zur Kompensation des Einflusses der spezifischen Kompressibilität des Fördermediums auf den Pumpwirkungsgrad mindestens ein Kolben (21) vor jedem Förderhub einen Vorkompressionshub ausführt, mit einem Kolbenpositionsgeber (404), mit einem Fördereinsatzmelder (111), und mit einer mit dem Kolbenpositionsgeber (404) und dem Fördereinsatzmelder (111) verbundenen Regelschaltung (405) für den Kolbenantrieb (401) zur Regelung der Kolbengeschwindigkeit, dadurch gekennzeichnet, daß der Fördereinsatzmelder (111) mindestens eine Auslaßventileinheit (28) auf Öffnen abtastet.

24. Feindosierpumpe nach Anspruch 23, deren Ventileinheiten eine Ventilkugel und einen entsprechenden Ventilsitz enthalten, dadurch gekennzeichnet, daß der Fördereinsatzmelder (111) auf das Abheben der Ventilkugel (31) mindestens eines Auslaßventils (28) vom Ventilsitz (30) anspricht.

25. Feindosierpumpe nach Anspruch 24, dadurch gekennzeichnet, daß zumindest Teile einer Auslaßventileinheit (28) aus durchsichtigem Material besteht, wobei jedoch die Ventilkugel (31) andersfarbig oder durchsichtig ist, und daß der Fördereinsatzmelder (111) ein optisches Sensorsystem, wie beispielsweise eine Lichtschranke ist, die auf das Abheben der Ventilkugel (31) vom Ventilsitz (30) anspricht.

26. Feindosierpumpe nach Anspruch 25, dadurch gekennzeichnet, daß zumindest Teile der Auslaßventileinheit (28) aus durchsichtigem Saphir oder durchsichtigem monokristallinem Zirkonoxid besteht, und daß die Ventilkugel (31) aus Rubin besteht.

27. Feindosierpumpe nach Anspruch 24, dadurch gekennzeichnet, daß die Ventilkugel zumindest einer Auslaßventileinheit aus ferromagnetischem Material, vorzugsweise aus speziellem nichtrostendem Stahl besteht, und daß der Fördereinsatzmelder die Bewegung der Ventilkugel magnetisch abtastet.

28. Feindosierpumpe nach Anspruch 24, dadurch gekennzeichnet, daß die Ventilkugel aus ferromagnetischem Material besteht und keramik-beschichtet ist, beispielsweise mit Titankarbid, und der Fördereinsatzmelder die Bewegung der Ventilkugel magnetisch abtastet.

0228628

**FIG.1**

**FIG.2**

0228628

FIG. 3

FIG. 4

*FIG. 5*

0228628

FLÜSSIGKEITS QUELLE

405

GESCHW. REGLER

111    111

27  11  12  28    28  12  11  27
31    31

9    9
21    21
8    8
16    16
203    203
22    22    404
403

FLÜSSIGKEITS FÖRDERAUSG.

400    MOTOR    400    402    403
401

FIG.6